# EUROPÄISCHE PATENTANMELDUNG

(11) **EP 0 924 837 A2**
(43) Veröffentlichungstag der Anmeldung: **23.06.1999**
(21) Anmeldenummer: 98123062.6
(22) Anmeldetag: 09.12.1998
(51) Int. Cl.: H02J 13/00

(54) **Zusatzeinrichtung für Schutzeinrichtungen, insbesondere für Fehlerstrom- bzw. Differenzstromschutzeinrichtungen**

(30) Priorität: 22.12.1997 DE 19757330
(71) Anmelder: SIEMENS AKTIENGESELLSCHAFT, 80333 München (DE)
(72) Erfinder: Solleder, Reinhard, Dipl.-Ing., 93138 Lappersdorf (DE); Kleemeier, Manfred, Dipl.-Ing., 93073 Neutraubling (DE); Schmid, Reinhard, Dipl.-Ing., 93051 Regensburg (DE)

(57) **Zusammenfassung**

Zusatzeinrichtung (1) für Schutzeinrichtungen (2) mit Kenndaten zur Erhöhung der Zuverlässigkeit bzw. Funktionstüchtigkeit, die schaltungsmäßig in Serie und wirkungsmäßig parallel in das durch die Schutzeinrichtung (2) zu überwachende Netz eingeschaltet ist und eine Erfassungseinrichtung (3) aufweist, die über eine Auswerteeinrichtung (4) mit einer Ausgabeeinrichtung (5) bzw. einem Aktor in Verbindung steht, wobei zusätzliche Sensoren an der Erfassungseinrichtung angeschlossen sein können. Es ist vorgesehen, daß die Auswerteeinrichtung (4) dafür ausgelegt ist, die Kenndaten der Schutzeinrichtung (2) zu überwachen, zu ergänzen oder zu verändern.

## Beschreibung

Die Erfindung bezieht sich auf eine Zusatzeinrichtung für Schutzeinrichtungen mit Kenndaten zur Erhöhung der Zuverlässigkeit bzw. Funktionstüchtigkeit, die schaltungsmäßig in Serie in das durch die Schutzeinrichtung zu überwachende Netz eingeschaltet ist, im einzelnen nach Gattungsbegriff von Anspruch 1. Die Zusatzeinrichtung weist eine Erfassungseinrichtung auf, die über eine Auswerteeinrichtung mit einer Ausgabeeinrichtung bzw. einem Aktor in Verbindung steht, wobei zusätzliche Sensoren an der Auswerteeinrichtung angeschlossen sein können. Eine derartige Zusatzeinrichtung ist als Koppeladapter zum Anschließen eines Schutzschalters an einen Bus bekannt (EP-B-0 637 785). Hierdurch können Schutzschaltern sogenannte Zusatzfunktionen zur Verfügung gestellt werden, indem die approbierte Schutzwirkung durch weitere Schutzwirkungen des Koppeladapters ergänzt werden.

Der Erfindung liegt die Aufgabe zugrunde, allgemein eine Zusatzeinrichtung zu entwickeln, die auch unabhängig von einem Bus arbeiten kann.

Die Lösung der geschilderten Aufgabe erfolgt durch eine Zusatzeinrichtung nach Anspruch 1. Hierbei ist die Auswerteeinrichtung dafür ausgelegt, die Kenndaten der Fehlerstromschutzeinrichtung zu überwachen, zu ergänzen oder zu verändern. Die Ergänzung der Schutzwirkungen bei einem Koppeladapter, der mit einem Bussystem arbeitet, ist an sich bekannt (EP-B-0 637 785). In der Gebäudesystemtechnik, die mit einem Bussystem arbeitet, ist auch ein Modul bekannt, mit dem das Schutzprofil eines Schutzschalters sich mit weiteren Schutzprofilen ergänzen oder unterlegen läßt (EP-A-93 115 070).

Die Zusatzeinrichtung nach Anspruch 1 ermöglicht auch ohne Bus zu arbeiten, wobei zusätzlich auch mit einem Bus gearbeitet werden kann. Der erforderliche wirtschaftliche Aufwand kann daher niedrig gehalten werden.

Insbesondere kann die Zusatzeinrichtung auf Fehlerstromschutzeinrichtungen abgestimmt sein. Die Zusatzeinrichtung kann in einer Schutzeinrichtung integriert oder als gesondertes Anbauteil ausgeführt sein. Man hat daher in der Anwendung Wahlfreiheit.

Die Erfassungseinrichtung, die Auswerteeinrichtung und die Ausgabeeinrichtung können bei Abstimmung der Zusatzeinrichtung auf Fehlerstromschutzeinrichtungen jeweils netzspannungsunabhängig arbeiten oder netzspannungsabhängig. Es sind auch vielfältige Kombinationen möglich.

Die Zusatzeinrichtung kann wechselstromsensitiv, pulsstromsensitiv oder allstromsensitiv ausgeführt sein oder für eine gewünschte kombinierte Sensitivität.

Die Ausgabeeinrichtung kann zusätzlich oder auch allein an ein Bussystem angeschlossen sein. Weitere Möglichkeiten zur Meldung sind beispielsweise optische oder akustische Signalgeber.

Die Ausgabeeinrichtung kann auch in Wirkverbindung mit einem weiteren Schutzschaltgerät bzw. Schaltgerät stehen, das über- oder untergeordnet zu der Schutzeinrichtung steht, mit dem die Zusatzeinrichtung zum Zusammenarbeiten vorgesehen ist. Das weitere Schaltgerät kann als Arbeitsstromauslöser, als Unterspannungsauslöser, als Hauptschalter, als Leitungsschutzschalter oder als Schalteinrichtung mit Fernantrieb ausgeführt sein.

Die Auswerteeinrichtung kann darüber hinaus auch mit einem externen Sensor in Verbindung stehen, von dem sie zu verarbeitende Signale oder Informationen erhält.

Die Erfindung soll nun anhand von in der Zeichnung grob schematisch wiedergegebenen Ausführungsbeispielen näher erläutert werden:

In der Zeichnung ist eine Zusatzeinrichtung wiedergegeben, die alternativ oder kumuliert mit beispielhaft wiedergegebenen Schutzeinrichtungen zusammenarbeitet.

Die Zusatzeinrichtung ist an einer Schutzeinrichtung angebaut.

Die Zusatzeinrichtung 1 für Schutzeinrichtungen 2 ist schaltungsmäßig in Serie und der Wirkung nach redundant in das durch eine Schutzeinrichtung 2 zu überwachende Netz eingeschaltet. Die Zusatzeinrichtung weist eine Erfassungseinrichtung 3 auf, die über eine Auswerteeinrichtung 4 mit einer Ausgabeeinrichtung 5 in Verbindung steht. Die Ausgabeeinrichtung 5 kann als Meldeeinrichtung oder Sender oder auch als Aktor ausgeführt sein, der auf ein unabhängiges Schaltgerät 9 einwirkt. Die Auswerteeinrichtung 4 ist dafür ausgelegt, die Kenndaten der Schutzeinrichtung zu überwachen, zu ergänzen oder zu verändern. Die Ausgabeeinheit 5 kann mehrere mechanische Schaltglieder, wie Schließer bzw. Öffner oder auch elektronische Schaltglieder aufweisen. Die Erfassung, Auswertung und Ausgabe kann sowohl netzspannungsunabhängig, netzspannungsabhängig oder daraus kombiniert gestaltet sein. Die Zusatzeinrichtung erfüllt die für die Schutzmaßnahmen geforderten Werte, wie beispielsweise Auslösezeit, Bemessungsfehlerstrom oder andere Kenndaten. Die Zusatzeinrichtung kann auch zum Basisgerät, also der Schutzeinrichtung, mit der sie zusammenarbeiten soll, zeitverzögert ausgeführt sein. Die Zusatzeinrichtung kann je nach Anwendungsfall wechselstromsensitiv, pulsstromsensitiv oder allstromsensitiv oder in einer Kombination hieraus ausgeführt sein.

Die Zusatzeinrichtung kann mittels Meldeschaltgliedern 6 ein Ausschaltversagen einer Schutzeinrichtung 2, als Basisgerät zu verstehen, anzeigen und an ein Bussystem 7 zur Einleitung weiterer Aktivitäten geben. Beispielsweise können entsprechend DE-A-102 728 Hauptgeräte bei fehlerhaftem Verhalten von Zweiggeräten die Abschaltfunktion übernehmen.

Über die Ausgabeeinrichtung 5 der Zusatzeinrichtung können Ausschaltbefehle an über- oder untergeordnete Schutzeinrichtungen, beispielsweise unabhängige Schaltgeräte 9, gegeben werden. Eine Einrichtung 2 in der Ausführung als Zusatzeinheit 8 zu einem weiteren Schaltgerät 9 kann als Arbeitsstromauslöser oder als Unterspannungsauslöser von Hauptschaltern oder Leitungsschutzschaltern wirken oder als Fernantrieb ausgeführt sein. An der Ausgabeeinheit können allgemein Schutzeinrichtungen oder Schütze oder Kombinationen der bereits geschilderten Einrichtungen angeschlossen sein. Die Zusatzeinrichtung kann auch als zusätzlichen Sensor, der an der Auswerteeinrichtung 4 angeschlossen ist, eine thermische Überwachung einer zugeordneten Schutzeinrichtung enthalten. Bei der Zusatzeinrichtung kann an ihrer Auswerteeinrichtung ein Stromsensor einer zugeordneten Schutzeinrichtung angeschlossen sein. Dadurch kann die Zusatzeinrichtung auch zur Zuverlässigkeitserhöhung von Leitungsschutz- und Leistungsschaltern verwendet werden.

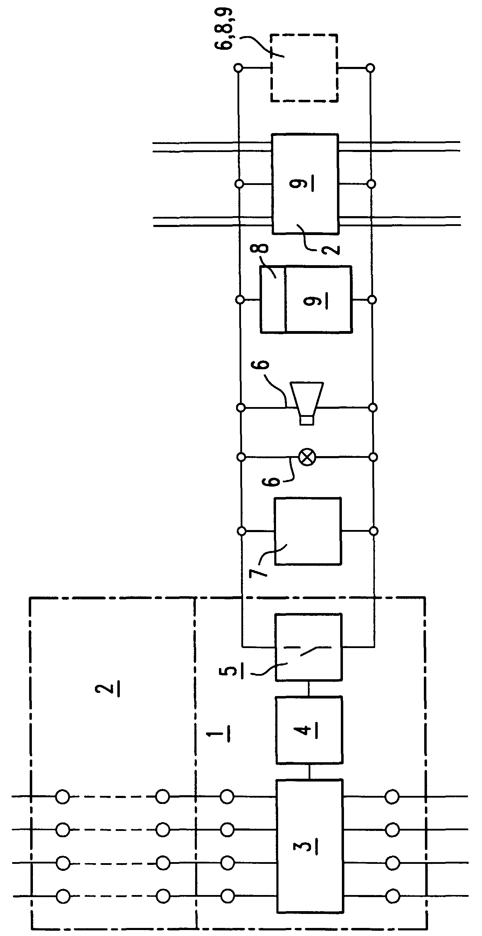

Es ist besonders vorteilhaft, daß Schutzeinrichtungen durch die Zusatzeinrichtung bei Bedarf auch nachträglich in wirtschaftlicher Weise nachgerüstet werden können. Eine Anordnung nach FIG 2 aus Schutzeinrichtung 2 und Zusatzeinrichtung 1 kann entsprechend als so im Auslieferungszustand bereitgestellt verstanden werden oder als eine Einheit, die sich durch Nachrüstung ergeben hat.

## Patentansprüche

1. Zusatzeinrichtung (1) für Schutzeinrichtungen (2) mit Kenndaten zur Erhöhung der Zuverlässigkeit bzw. Funktionstüchtigkeit,wobei die Zusatzeinrichtung schaltungsmäßig in Serie in das durch die Schutzeinrichtung (2) zu überwachende Netz eingeschaltet ist und eine Erfassungseinrichtung (3) aufweist, die über eine Auswerteeinrichtung (4) mit einer Ausgabeeinrichtung (5) bzw. einem Aktor in Verbindung steht, wobei zusätzliche Sensoren an der Auswerteeinrichtung angeschlossen sein können,
**dadurch gekennzeichnet**,
daß die Auswerteeinrichtung (4) dafür ausgelegt ist, die Kenndaten der Schutzeinrichtung (2) zu überwachen, zu ergänzen oder zu verändern.

2. Zusatzeinrichtung nach Anspruch 1,
**dadurch gekennzeichnet**,
daß sie auf Fehlerstromschutzeinrichtungen oder auf Differenzstromschutzeinrichtungen abgestimmt ist.

3. Zusatzeinrichtung nach Anspruch 1 und 2,
**dadurch gekennzeichnet**,
daß sie in einer Schutzeinrichtung integriert oder als gesondertes Anbauteil ausgeführt ist.

4. Zusatzeinrichtung nach Anspruch 1 und 2,
**dadurch gekennzeichnet**,
daß die Erfassungseinrichtung (3), die Auswerteeinrichtung (4) und die Ausgabeeinrichtung (5) netzspannungsunabhängig arbeiten.

5. Zusatzeinrichtung nach Anspruch 1 und 2,
**dadurch gekennzeichnet**,
daß die Erfassungseinrichtung (3), die Auswerteeinrichtung (4) und die Ausgabeeinrichtung (5) netzspannungsabhängig arbeiten.

6. Zusatzeinrichtung nach Anspruch 1 und 2,
**dadurch gekennzeichnet**,
daß die Erfassungseinrichtung (3), die Auswerteeinrichtung (4) und die Ausgabeeinrichtung (5) gemischt netzspannungsunabhängig und netzspannungsabhängig arbeiten.

7. Zusatzeinrichtung nach Anspruch 1 und 2,
**gekennzeichnet**
durch eine Ausführung als wechselstromsensitive und/oder pulsstromsensitive und/oder allstromsensitive Einrichtung.

8. Zusatzeinrichtung nach Anspruch 1 und einem der vorhergehenden Ansprüche,
**dadurch gekennzeichnet**,
daß die Ausgabeeinrichtung (5) an ein Bussystem (7) angeschlossen ist.

9. Zusatzeinrichtung nach Anspruch 1, 2 oder 8,
**dadurch gekennzeichnet**,
daß die Ausgabeeinheit (5) in Wirkverbindung mit einer Zusatzeinheit 8 und einer weiteren Schutzeinrichtung bzw. einem unabhängigen Schaltgerät (9) steht.

10. Zusatzeinrichtung Anspruch 1 oder einem der vorhergehenden Ansprüche,
**dadurch gekennzeichnet**,
daß die Auswerteeinrichtung (4) mit einem externen Sensor in Verbindung steht.

11. Zusatzeinrichtung nach Anspruch 1 oder einem der vorhergehenden Ansprüche,
**dadurch gekennzeichnet**,
daß die Ausgabeeinrichtung (5) mit Meldeschaltgliedern (6) in Verbindung steht.

12. Zusatzeinrichtung nach Anspruch 1 oder einem der vorhergehenden Ansprüche,
**dadurch gekennzeichnet**,
daß an der Auswerteeinrichtung (4) ein thermischer Sensor einer zugeordneten Schutzeinrichtung (2) angeschlossen ist.
